# EUROPEAN PATENT APPLICATION

(11) **EP 1 152 035 A1**
(43) Date of publication of application: **07.11.2001**
(21) Application number: 00961113.8
(22) Date of filing: 20.09.2000
(51) Int. Cl.: C08L 67/02, B29C 49/02, C08J 5/00, C08K 5/16

(54) **PREFORM FOR HOLLOW MOLDING MADE OF POLYESTER RESIN COMPOSITION, HOLLOW MOLDING MADE OF POLYESTER RESIN COMPOSITION, AND PROCESS FOR PRODUCING THE SAME**

(30) Priority: 21.09.1999 JP 26714899
(71) Applicant: Mitsui Chemicals, Inc., Tokyo 100-6070 (JP)
(72) Inventor: Kiyomiya, Tatsuya Mitsui Chemicals, Inc., Kuga-gun Yamaguchi 740-0061 (JP); Masumoto, Mitsuaki Mitsui Chemicals, Inc., Kuga-gun Yamaguchi 740-0061 (JP); Oi, Ryu Mitsui Chemicals, Inc., Yokohama-shi Kanagawa 247-8567 (JP); Matsuzaki, Yoriaki Mitsui Chemicals, Inc., Yokohama-shi Kanagawa 247-8567 (JP); Kohgo, Osamu Mitsui Chemicals, Inc., Yokohama-shi Kanagawa 247-8567 (JP)
(74) Representative: Cresswell, Thomas Anthony
(86) International application number: JP0006414
(87) International publication number: WO0121709

(57) **Abstract**

Provided is a preform for a polyester resin composition blow molded product, which is capable of producing a blow molded product of excellent hue and transparency and has excellent near infrared absorptive power. Also provided is a blow molded product which is produced from the preform and has excellent hue and transparency, and a process for producing the blow molded product.

The preform for a polyester resin composition blow molded product comprises a polyester resin composition comprising a polyester resin and an infrared absorbing colorant which is at least one colorant selected from a phthalocyanine infrared absorbing colorant and a naphthalocyanine infrared absorbing colorant and which has an infrared maximum absorption peak in the region of 700 to 2000 nm. The process for producing a polyester resin composition blow molded product comprises heating a preform, which is formed from a polyester resin composition comprising a polyester resin and the above-mentioned infrared absorbing colorant and has a temperature of not higher than the glass transition temperature, by an infrared heater, and then blow molding the preform.

## Description

### TECHNICAL FIELD

The present invention relates to a preform which comprises a polyester resin composition containing an infrared absorbing colorant and which has been improved in the rate of heating by a near infrared heater, a blow molded product obtained by blow molding of the preform, and a process for producing the blow molded product.

### BACKGROUND ART

Polyester resin blow molded products such as PET bottles generally have excellent mechanical properties, water barrier properties, gas barrier properties, chemical resistance, aroma retention properties, transparency and hygienic quality, so that they have been widely used as containers of foods, medicines, cosmetics, etc. in recent years.

Most of the polyester resin blow molded products are usually produced by a "cold parison process". The cold parison process comprises two molding steps. In the first step, a hollow preformed product in the form of a test tube, that is called a preform, is produced, and the preform is cooled to a temperature of not higher than the glass transition temperature. In the second step, the preform is blow molded by a highpressure air in a mold to produce a blow molded product. In this second step, the preform is heated to an optimum stretching temperature (e.g., about 100°C in case of polyethylene terephthalate). For the heating in the second step, a near infrared heater having a maximum emission wavelength in the region of 1000 to 2000 nm is usually used. However, the absorptive power of the polyester resin to absorb electromagnetic wave of 700 to 2000 nm that is infrared rays is low, so that it takes a long period of time to heat the resin up to the optimum stretching temperature. On this account, the heating time becomes a rate-determining step of the whole molding cycle. Accordingly, development of a method to shorten the heating time has been desired.

As a method to solve such a problem as mentioned above, a method of adding carbon black to the polyester resin to improve the infrared absorptive power of the preform is disclosed in Japanese Patent Publication No. 21938/1993. In Japanese Patent Laid-Open Publication No. 230933/1991, there is disclosed a method of incorporating metal particles into the polyester resin to shorten the heating time in the second step of the cold parison process. These methods, however, are insufficient in the hue and transparency of the resulting molded products.

In National Publication of International Patent No. 507074/1995 (PCT/US92/08676), there are described a thermoplastic polymer composition obtained by mixing a thermoplastic polymer with a heat-stable near infrared 'fluorescent labeled compound, and a method in which a container is identified and separated by detecting fluorescence emitted by a molded product (e.g., container) made of the polymer composition when the molded product is irradiated with near infrared rays.

### OBJECT OF THE INVENTION

The present invention has been made under such circumstances as mentioned above, and it is an object of the invention to provide a preform for a polyester resin composition blow molded product, which is capable of producing a blow molded product of excellent hue and transparency, has excellent near infrared absorptive power and has a temperature of not higher than the glass transition temperature. It is another object of the invention to provide a blow molded product which is produced from the above-mentioned preform and has excellent hue and transparency. It is a further object of the invention to provide a process for producing the blow molded product.

### DISCLOSURE OF THE INVENTION

The preform for a polyester resin composition blow molded product according to the invention, which has a temperature of not higher than the glass transition temperature, comprises a polyester resin composition comprising a polyester resin and an infrared absorbing colorant which is at least one colorant selected from a phthalocyanine infrared absorbing colorant and a naphthalocyanine infrared absorbing colorant and which has an infrared maximum absorption peak in the region of 700 to 2000 nm.

The polyester resin composition blow molded product according to the invention is produced by a cold parison process from a polyester resin composition comprising a polyester resin and an infrared absorbing colorant which is at least one colorant selected from a phthalocyanine infrared absorbing colorant and a naphthalocyanine infrared absorbing colorant and which has an infrared maximum absorption peak in the region of 700 to 2000 nm.

The process for producing a polyester resin composition blow molded product according to the invention comprises the steps of:
heating a preform formed from a polyester resin composition and having a temperature of not higher than the glass transition temperature by a near infrared heater, said polyester resin composition comprising a polyester resin and an infrared absorbing colorant which is at least one colorant selected from a phthalocyanine infrared absorbing colorant and a naphthalocyanine infrared absorbing colorant and which has an infrared maximum absorption peak in the region of 700 to 2000 nm, and
blow molding the preform.

The infrared absorbing colorant is, for example, at least one colorant selected from a phthalocyanine compound represented by the following formula (1) and a naphthalocyanine compound represented by the following formula (2): 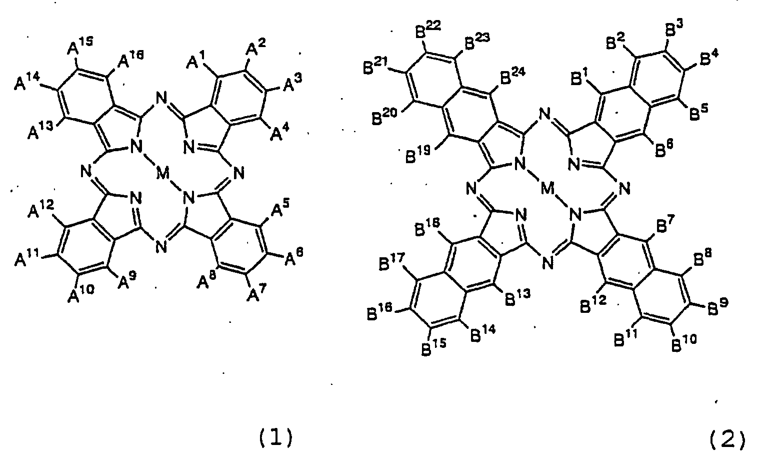 wherein M is a divalent metal atom, a trivalent substituted metal atom, a tetravalent substituted atom or an oxy metal,

A¹ to A¹⁶ and B¹ to B²⁴ may be the same or different and are each a hydrogen atom, a halogen atom, an alkyl group which may have a substituent, an aryl group which may have a substituent, an alkoxy group which may have a substituent, an aryloxy group which may have a substituent, an alkylthio group which may have a substituent, an arylthio group which may have a substituent, an alkylamino group which may have a substituent or an arylamino group which may have a substituent, and
two neighboring groups of the groups indicated by A¹ to A¹⁶ may be linked to form a five-membered ring or a six-membered ring in cooperation with carbon atoms to which said two neighboring groups are bonded, and two neighboring groups of the groups indicated by B¹ to B²⁴ may be linked to form a five-membered ring or a six-membered ring in cooperation with carbon atoms to which said two neighboring groups are bonded.

The polyester resin is preferably polyethylene terephthalate or polyethylene naphthalate.

### BEST MODE FOR CARRYING OUT THE INVENTION

The preform for a polyester resin composition blow molded product, the polyester resin composition blow molded product and the process for producing the blow molded product according to the invention are described in detail hereinafter.

The preform for a polyester resin composition blow molded product according to the invention is formed from a polyester resin composition comprising a polyester resin and at least one infrared absorbing colorant selected from a specific phthalocyanine infrared absorbing colorant and a specific naphthalocyanine infrared absorbing colorant.

### Polyester resin

The polyester resin for use in the invention can be prepared by subjecting an aromatic dicarboxylic acid or its ester-forming derivative and an aliphatic diol or its ester-forming derivative to esterification reaction to obtain a low condensate (ester low polymer), then subjecting the low condensate to deglycolation reaction (liquid phase polycondensation) in the presence of a polycondensation catalyst to obtain a high-molecular weight product, and optionally performing solid phase polycondensation.

Examples of the aromatic dicarboxylic acids used for preparing the polyester resin include terephthalic acid, phthalic acid, isophthalic acid, naphthalenedicarboxylic acid, diphenyldicarboxylic acid and diphenoxyethanedicarboxylic acid.

Examples of the aliphatic diols include ethylene glycol, trimethylene glycol, propylene glycol, tetramethylene glycol, neopentyl glycol, hexamethylene glycol and dodecamethylene glycol.

In the preparation of the polyester resin, together with the aromatic dicarboxylic acid, an aliphatic. dicarboxylic acid, such as adipic acid, sebacic acid, azelaic acid or decanedicarboxylic acid, or an alicyclic dicarboxylic acid, such as cyclohexanedicarboxylic acid, can be used as a starting materiel, and together with the aliphatic diol, an alicyclic glycol, such as cyclohexanedimethanol, or an aromatic diol, such as bisphenol, hydroquinone, 2,2-bis(4-β-hydroxyethoxyphenyl)propane or 1,3-bis(2-dihyroxyethoxy)benzene, can be used as a starting material.

Moreover, a polyfunctional compound, such as trimesic acid, trimethylolethane, trimethylolpropane, trimethylolmethane or pentaerythritol, can be used as a starting material.

In the present invention, the polyester resin is desired to be:
polyethylene terephthalate prepared from terephthalic acid or its ester-forming derivative, ethylene glycol or its ester-forming derivative, and if necessary, an aromatic dicarboxylic acid other than terephthalic acid (e.g., isophthalic acid), or
polyethylene naphthalate prepared from naphthalenedicarboxylic acid or its ester-forming derivative, ethylene glycol or its ester-forming derivative, and if necessary, an aromatic dicarboxylic acid other than naphthalenedicarboxylic acid.

### Infrared absorbing colorant

The infrared absorbing colorant for use in the invention is at least one colorant selected from a phthalocyanine compound represented by the following formula (1) and a naphthalocyanine compound represented by the following formula (2).

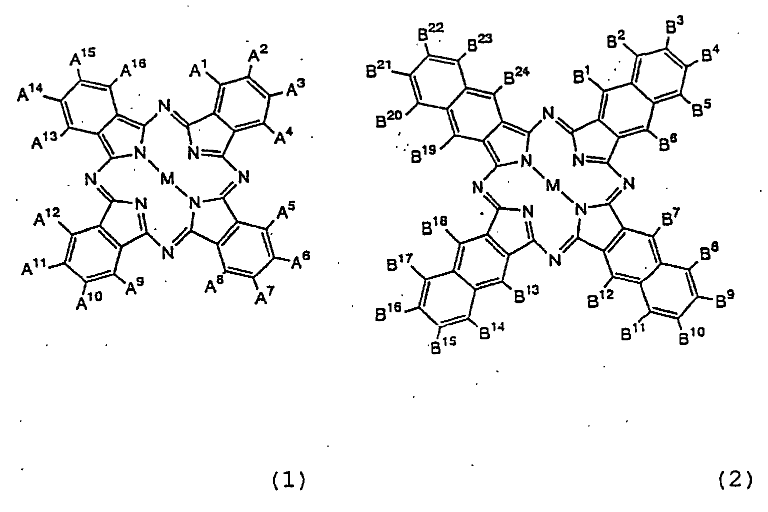

In the formulas (1) and (2), M is a divalent metal atom, a trivalent substituted metal atom, a tetravalent substituted atom or an oxy metal.

Examples of the divalent metal atoms include Cu(II), Zn(II), Fe(II), Co(II), Ni(II), Ru(II), Rh(II), Pd(II), Pt(II), Mn(II), Mg(II), Ti(II), Be(II), Ca(II), Ba(II), Cd(II), Hg(II), Pb(II) and Sn(II).

Examples of the trivalent substituted metal atoms include mono-substituted trivalent metal atoms, such as AlCl, AlBr, AlF, AlI, GaCl, GaF, GaI, GaBr, InCl, InBr, InI, InF, TlCl, TlBr, TlI, TlF, FeCl, RuCl, Al-C₆H₅, Al-C₆H₄(CH₃), In-C₆H₅, In-C₆H₄(CH₃), In-C₆H₅, Mn(OH), Mn(OC₆H₅) and Mn(OSi(CH₃)₃).

Examples of the tetravalent substituted atoms include di-substituted tetravalent atoms, such as CrCl₂, SiCl₂, SiBr₂, SiF₂, SiI₂, ZrCl₂, GeCl₂, GeBr₂, GeI₂, GeF₂, SnCl₂, SnBr₂, SnF₂, TiCl₂, TiBr₂, TiF₂, Si(OH)₂, Ge(OH)₂, Zr(OH)₂, Mn(OH)₂, Sn(OH)₂, TiR₂, CrR₂, SiR₂, SnR₂, GeR₂ (R is an alkyl group, a phenyl group, a naphthyl group or a derivative thereof), Si(OR')₂, Sn(OR')₂, Ge(OR')₂, Ti(OR')₂, Cr(OR')₂ (R' is an alkyl group, a phenyl group, a naphthyl group, a trialkylsilyl group, a dialkylalkoxysilyl group or a derivative thereof), Sn(SR")₂ and Ge(SR")₂ (R" is an alkyl group, a phenyl group, a naphthyl group or a derivative thereof).

Examples of the oxy metals include VO, MnO and TiO.

Of these, Cu(II), Pd(II), Pb(II), AlCl, InCl, TiO or VO is preferable as M, and VO is particularly preferable.

A¹ to A¹⁶ and B¹ to B²⁴ may be the same or different and are each a hydrogen atom, a halogen atom, an alkyl group which may have a substituent, an aryl group which may have a substituent, an alkoxy group which may have a substituent, an aryloxy group which may have a substituent, an alkylthio group which may have a substituent, an arylthio group which may have a substituent, an alkylamino group which may have a substituent or an arylamino group which may have a substituent.

Examples of the halogen atoms include fluorine, chlorine, bromine and iodine.

Examples of the alkyl groups which may have a substituent include straight-chain or branched alkyl groups of 1 to 20 carbon atoms, preferably 1 to 10 carbon atoms, such as methyl, ethyl, n-propyl, isopropyl, n-butyl, iso-butyl, sec-butyl, n-pentyl, isopentyl, 1,2-dimethylpropyl, n-hexyl, 1,3-dimethylbutyl, 1,2-dimethylbutyl, n-heptyl, 1,4-dimethylpentyl, 1-ethyl-3-methylbutyl, n-octyl, 2-ethylhexyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, n-eicosyl, benzyl, sec-phenylethyl, 2-methylbenzyl, 3-methylbenzyl, 4-methylbenzyl, 2-phenylethyl, 3-dimethylaminopropyl, 2-dimethylaminoethyl, 2-diisopropylaminoethyl, 2-diethylaminoethyl, 2,2,2-trifluoro-1-(trifluoromethyl)ethyl, 2-(1-piperidinyl)ethyl, 3-(1-piperidinyl)propyl, 3-(4-morpholinyl)propyl, 3-(4-morpholinyl)ethyl, 2-(1-pyrrolidinyl)ethyl and 2-pyridylmethyl; and cycloalkyl groups of 3 to 20 carbon atoms, preferably 3 to 10 carbon atoms, such as cyclopentyl, cyclohexyl, horbornyl and adamantyl.

Examples of the aryl groups which may have a substituent include aryl groups of 6 to 20 carbon atoms, preferably 6 to 12 carbon atoms, such as phenyl, tolyl, dimethylphenyl, trimethylphenyl, ethylphenyl, propylphenyl, biphenylyl, 2-mercaptophenyl, 3-mercaptophenyl, 4-mercaptophenyl, 2-methylphenyl, 3-methylphenyl, 4-methylphenyl, naphthyl, methylnaphthyl, anthryl and phenanthryl.

Examples of the alkoxy groups which may have a substituent include alkoxy groups of 1 to 20 carbon atoms, preferably 1 to 10 carbon atoms, such as methoxy, ethoxy, n-propoxy, isopropoxy, n-butoxy, isobutoxy, sec-butoxy, n-pentoxy, isopentoxy, n-hexyloxy, cyclohexyloxy, n-heptyloxy, n-octyloxy, 2-ethylhexyloxy, n-nonyloxy, methoxyethoxy, ethoxyethoxy, ethoxyethoxyethoxy, hydroxyethoxyethoxy, diethylaminoethoxy, aminoethoxy, n-butylaminoethoxy, benzylaminoethoxy, methylcarbonylaminoethoxy, phenylcarbonyaminoethoxy and benzyloxy.

Examples of the aryloxy groups which may have a substituent include aryloxy groups of 6 to 20 carbon atoms, preferably 6 to 12 carbon atoms, such as phenoxy, 2-methylphenoxy, 3-methylphenoxy, 4-methylphenoxy and naphthoxy.

Examples of the alkylthio groups which may have a substituent include alkylthio groups of 1 to 20 carbon atoms, preferably 1 to 10 carbon atoms, such as methylthio, ethylthio, n-propylthio, isopropylthio, n-butylthio, isobutylthio, sec-butylthio, t-butylthio, n-pentylthio, isopentylthio, neo-pentylthio, 1,2-dimethylpropylthio, n-hexylthio, cyclohexylthio, n-heptylthio, 2-ethylhexylthio, n-octylthio, n-nonylthio, methoxyethylthio, ethoxyethylthio, propoxyethyithio, butoxyethylthio, aminoethylthio, n-butylaminoethylthio, benzylaminoethylthio, methylcarbonylaminoethylthio, phenylcarbonylaminoethylthio, methylsulfonylaminoethylthio, phenylsulfonylaminoethylthio, dimethylaminoethylthio and diethylaminoethylthio.

Examples of the arylthio groups which may have a substituent include arylthio groups of 6 to 20 carbon atoms, preferably 6 to 12 carbon atoms, such as phenylthio, naphthylthio, 4-methylphenylthio, 4-ethylphenylthio, 4-propylphenylthio, 4-t-butylphenylthio, 4-methoxyphenylthio, 4-ethoxyphenylthio, 4-aminophenylthio, 4-alkylaminophenylthio, 4-dialkylaminophenylthio, 4-phenylaminophenylthio, 4-diphenylaminophenylthio, 4-hydroxyphenylthio, 4-chlorophenylthio, 4-bromophenylthio, 2-methylphenylthio, 2-ethylphenylthio, 2-propylphenylthio, 2-t-butylphenylthio, 2-methoxyphenylthio, 2-ethoxyphenylthio, 2-aminophenylthio, 2-alkylaminophenylthio, 2-dialkylaminophenylthio, 2-phenylaminophenylthio, 2-diphenylaminophenylthio, 2-hydroxyphenylthio, 4-dimethylaminophenylthio, 4-methylaminophenylthio, 4-methylcarbonylaminophenylthio, 4-phenylcarbonylaminophenylthio, 4-methylsulfonylaminophenylthio and 4-phenylsulfonylaminophenylthio.

Examples of the alkylamino groups which may have a substituent include alkylamino groups of 1 to 20 carbon atoms, preferably 1 to 10 carbon atoms, such as methylamino, ethylamino, n-propylamino, isopropylamino, butylamino, pentylamino, dipentylamino, hexylamino, heptylamino, octylamino, nonylamino and benzylamino.

Examples of the arylamino groups which may have a substituent include arylamino groups of 6 to 20 carbon atoms, preferably 6 to 12 carbon atoms, such as phenylamino, 4-methylphenylamino, 4-methoxyphenylamino, hydroxyphenylamino and naphthylamino.

Of the groups indicated by A¹ to A¹⁶, two neighboring groups may be linked to form a five-membered ring or a six-membered ring in cooperation with carbon atoms to which said two neighboring groups are bonded. Of the groups indicated by B¹ to B²⁴, two neighboring groups may be linked to form a five-membered ring or a six-membered ring in cooperation with carbon atoms to which said two neighboring groups are bonded.

Examples of the groups wherein two neighboring groups of the groups indicated by A¹ to A¹⁶ or B¹ to B²⁴ are linked to form a five-membered ring or a six-membered ring in cooperation with carbon atoms to which said two neighboring groups are bonded are given below.

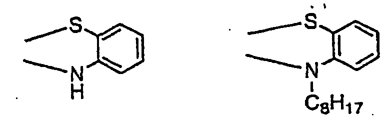

The alkyl group which may have a substituent, the aryl group which may have a substituent, the alkoxy group which may have a substituent, the aryloxy group which may have a substituent, the alkylthio group which may have a substituent, the arylthio group which may have a substituent, the alkylamino group which may have a substituent, the arylamino group which may have a substituent and the group (wherein two neighboring groups of the groups indicated by A¹ to A¹⁶ or B¹ to B²⁴ are linked to form a five-membered ring or a six-membered ring in cooperation with carbon atoms to which said two neighboring groups are bonded) may further have a substituent. Examples of such substituents include the same halogen atoms, the same alkyl groups which may have a substituent, the same aryl groups which may have a substituent, the same alkoxy groups which may have a substituent, the same aryloxy groups which may have a substituent, the same alkylthio groups which may have a substituent, the same arylthio groups which may have a substituent, the same alkylamino groups which may have a substituent and the same arylamino groups which may have a substituent as previously described.

Other examples of the substituents include:
alkylcarbonyl groups, such as acetyl (methylcarbonyl), propionyl, butylyl, isobutylyl, valeryl, isovaleryl, trimethylacetyl, hexanoyl, t-butylacetyl, heptanoyl, octanoyl, 2-ethylhexanoyl, nonanoyl, decanoyl, undecanoyl, lauroyl, tridecanoyl, tetradecanoyl, pentadecanoyl, hexadecanoyl, heptadecanoyl, octadecanoyl, oleoyl, cyclopentanecarbonyl, cyclohexanecarbonyl, 6-chlorohexanoyl, 6-bromohexanoyl, trifluoroacetyl, pentafluoropropionyl, perfluorooctanoyl, 2, 2,4,4, 5, 5, 7, 7, 7-nonafluoro-3, 6-dioxaheptanoyl, methoxyacetyl and 3,6-dioxaheptanoylarylcarbonyl; and
arylcarbonyl groups, such as benzoyl, o-chlorobenzoyl, m-chlorobenzoyl, p-chlorobenzoyl, o-fluorobenzoyl, m-fluorobenzoyl, p-fluorobenzoyl, o-acetylbenzoyl, m-acetylbenzoyl, p-acetylbenzoyl, o-methoxybenzoyl, m-methoxybenzoyl, p-methoxybenzoyl, o-methylbenzoyl, m-methylbenzoyl, p-methylbenzoyl, pentafluorobenzoyl and 4-(trifluoromethyl)benzoyl.

Also available as the substituents are heterocyclic compound residues; oxygen-containing groups, such as ester group, ether group, acyl group, carboxyl group, carbonato group, hydroxyl group, peroxy group and carboxylic anhydride group; nitrogen-containing groups, such as amino group, imino group, amido group, imido group, hydrazino group, hydrazono group, nitro group, nitroso group, cyano group, isocyano group, cyanic ester group, amidino group, diazo group and ammonium salt derived from amino group; boron-containing groups, such as boranediyl group, boranetriyl group and diboranyl group; sulfur-containing groups, such as mercapto group, thioester group, dithioester group, alkylthio group, arylthio group, thioacyl group, thioether group, thiocyanic ester group, isothiocyanic ester group, sulfonic ester group, sulfonamido group, thiocarboxyl group, dithiocarboxyl group, sulfo group, sulfonyl group, sulfinyl group and sulfenyl group; phosphorus-containing groups, such as phosphido group, phosphoryl group, thiophosphoryl group and phosphato group; silicon-containing groups; germanium-containing groups; and tin-containing groups.

A¹ to A¹⁶ and B¹ to B²⁴ are each preferably a hydrogen atom, a halogen atom, an arylthio group which may have a substituent or an arylamino group which may have a substituent.

The infrared absorbing colorant for use in the invention is at least one colorant selected from a phthalocyanine compound represented by the aforesaid formula (1) and a naphthalocyanine compound represented by the aforesaid formula (2) and has an infrared maximum absorption peak in the wavelength region of 700 to 2000 nm, preferably 750 to 2000 nm. When the infrared maximum absorption peak is in this wavelength region, the infrared absorbing colorant has excellent infrared absorption properties.

In the present invention, the infrared maximum absorption peak of the infrared absorbing colorant is measured in the following manner. The infrared absorbing colorant is added to the polyester to be molded, and from the resulting 'mixture, a molded product in the form of a plate having a thickness of 4 mm is produced by an injection molding machine under the conditions of a molding temperature of 280°C and a mold temperature of 10°C. Using the plate molded product, the infrared maximum absorption peak is measured by a spectrophotometer UV-3100 manufactured by Shimazu Seisakusho K.K.

As the infrared absorbing colorant for use in the invention, a colorant having a low absorptive power of electromagnetic wave in the visible region is preferable, and a colorant being not decomposed at a synthesis temperature of the polyester resin and a molding temperature of the preform, e.g., 260 to 320°C, is preferable.

The polyester resin composition for use in the invention comprises the polyester resin and the infrared absorbing colorant. In the composition, the infrared absorbing colorant is contained in an amount of usually 0.01 to 1000 ppm, preferably 0.1 to 100 ppm, particularly preferably 0.5 to 50 ppm.

When the content of the infrared absorbing colorant is in the above range, the polyester resin composition has excellent near infrared absorptive power, and is capable of obtaining a blow molded product having excellent hue and transparency.

### Polyester resin composition

As the process for preparing the polyester resin composition, any process hitherto known can be adopted. For example, a process in which the infrared absorbing colorant is added during the production of the polyester resin, e.g., in an esterification step or a polycondensation step, and a process in which the polyester resin and the infrared absorbing colorant are mixed and melt kneaded under heating are available.

The polyester resin composition may further contain additives usually added to polyester resins, such as hue adjusting agent, antistatic agent, ultraviolet light absorber, antioxidant and release agent.

### Preform

The preform for a polyester resin composition blow molded product according to the invention, which has a temperature of not higher than' the glass transition temperature, is formed from the polyester resin composition containing the specific infrared absorbing colorant. For producing the preform for a blow molded product from the polyester resin composition, any process hitherto known can be adopted, and the preform is produced from the polyester resin composition by, for example, injection molding.

The preform for a polyester resin composition blow molded product according to the invention is formed from the polyester resin composition containing the specific infrared absorbing colorant, and hence the preform has excellent absorptive power to absorb infrared rays in the region of 700 to 2000 nm that is emitted by a near infrared heater, and the temperature of the preform rises up to an optimum stretching temperature for a shorter period of time than that of a conventional preform.

### Blow molded product

The polyester resin composition blow molded product according to the invention is a blow molded product produced by a cold parison process from the polyester resin composition containing the specific infrared absorbing colorant. The blow molded product can be produced by heating a preform having a temperature of not higher than the glass transition temperature, e.g., room temperature, to an optimum stretching temperature, then holding the preform in a mold of desired shape and blowing air into the preform to fit it into the mold.

The preform for a polyester resin composition blow molded product according to the invention has excellent transparency and hue.

### Process for producing blow molded product

Next, the process for producing a polyester resin composition blow molded product according to the invention is described in detail.

First, from the polyester resin composition, a preform is produced. The preform can be produced by a hitherto known method such as injection molding. The temperature for heating the polyester resin to produce the preform-varies depending upon the type of the polyester resin used. When the polyester resin is polyethylene terephthalate, the heating temperature is in the range of preferably 270 to 300°C, and when the polyester resin is polyethylene naphthalate, the heating temperature is in the range of preferably 280 to 320°C. The preform is then cooled to a temperature of not higher than the glass transition temperature in a mold and if necessary in a forced cooling device outside the mold.

The preform thus obtained is then heated to an optimum stretching temperature by the use of a near infrared heater to perform blow molding. The heating temperature in the blow molding varies depending upon the type of the polyester resin used. When the polyester resin is polyethylene terephthalate, the heating temperature is in the rage of usually 90 to 125°C, preferably 100 to 120°C, and when the polyester resin is polyethylene naphthalate, the heating temperature is in the range of usually 115 to 150°C, preferably 120 to 140°C.

In the process for producing a blow molded product according to the invention, a preform comprising the polyester resin composition containing the specific infrared absorbing colorant is used, so that the time required for heating the preform to an optimum temperature can be reduced. Consequently, the molding cycle can be shortened and the blow molded product can be produced with excellent productivity.

### POSSIBILITY OF INDUSTRIAL APPLICATION

By the use of the preform for a polyester resin composition blow molded product according to the invention, a blow molded product having excellent hue and transparency can be produced, and in the second step of the cold parison process, heating of the preform by a near infrared heater can be carried out for a shorter period of time than that of a conventional preform.

The polyester resin composition blow molded product according to the invention has excellent hue and transparency.

The process for producing a polyester resin composition blow molded product according to the invention has a short molding cycle and is excellent in productivity.

### EXAMPLE

The present invention is further described with reference to the following examples, but it should be construed that the invention is in no way limited to those examples.

The maximum absorption peak wavelength of the infrared absorbing agent contained in the polyester was measured in the following manner. Using the same mixture pellets as used for the production of a preform, a plate having a thickness of 4 mm was prepared by an injection molding machine M-70 manufactured by Meiki Seisakusho under the conditions of a molding temperature of 280°C and a mold temperature of 10°C. Then, using the plate, the maximum absorption peak wavelength was measured by a spectrophotometer manufactured by Shimazu Seisakusho K.K.

### Examples 1-4, comparative Example 1

### Production of preform

Powdery polyethylene terephthalate (intrinsic viscosity: 0.83 dl/g) previously obtained by freeze pulverization was vacuum dried at 150°C for 10 hours. To 99.9 parts by weight of the polyethylene terephthalate, 0.1 part by weight of an infrared absorbing colorant shown in Table 1 was added, and the polyethylene terephthalate mixture was extruded by a single-screw extruder having a screw diameter of 40 mm (manufactured by Modern Machinery Co.) at an extrusion temperature of 260°C to obtain a strand. The strand was cut to obtain masterbatch pellets containing an infrared absorbing colorant.

The same powdery polyethylene terephthalate (intrinsic viscosity: 0.83 dl/g) as used above was mixed with the above-obtained masterbatch pellets containing an infrared absorbing colorant to obtain mixture pellets having an infrared absorbing colorant concentration shown in Table 2. The pellets were vacuum dried at 150°C for 10 hours.

The mixture pellets were then molded by an injection molding machine M-100 manufactured by Meiki Seisakusho under the conditions of a molding temperature of 280°C and a mold temperature of 10°C to prepare a 1.5-liter preform having a thickness of 3.8 mm and a weight of 55 g. 100 Shots were continuously made. In Examples 1 to 4 and Comparative Example 1, molding was performed without any trouble. All of the preforms obtained were transparent, and any burning or any foreign matter was not observed.

### Production of bottle

In an attempt to produce 100 of 1.5-liter bottles, the above-obtained preforms having a temperature of not higher than the glass transition temperature were subjected to biaxial orientation blow molding by the use of a biaxial orientation blow molding machine manufactured by Corpoplast Co., while hating them by an infrared heater.

The results are set forth in Table 2.

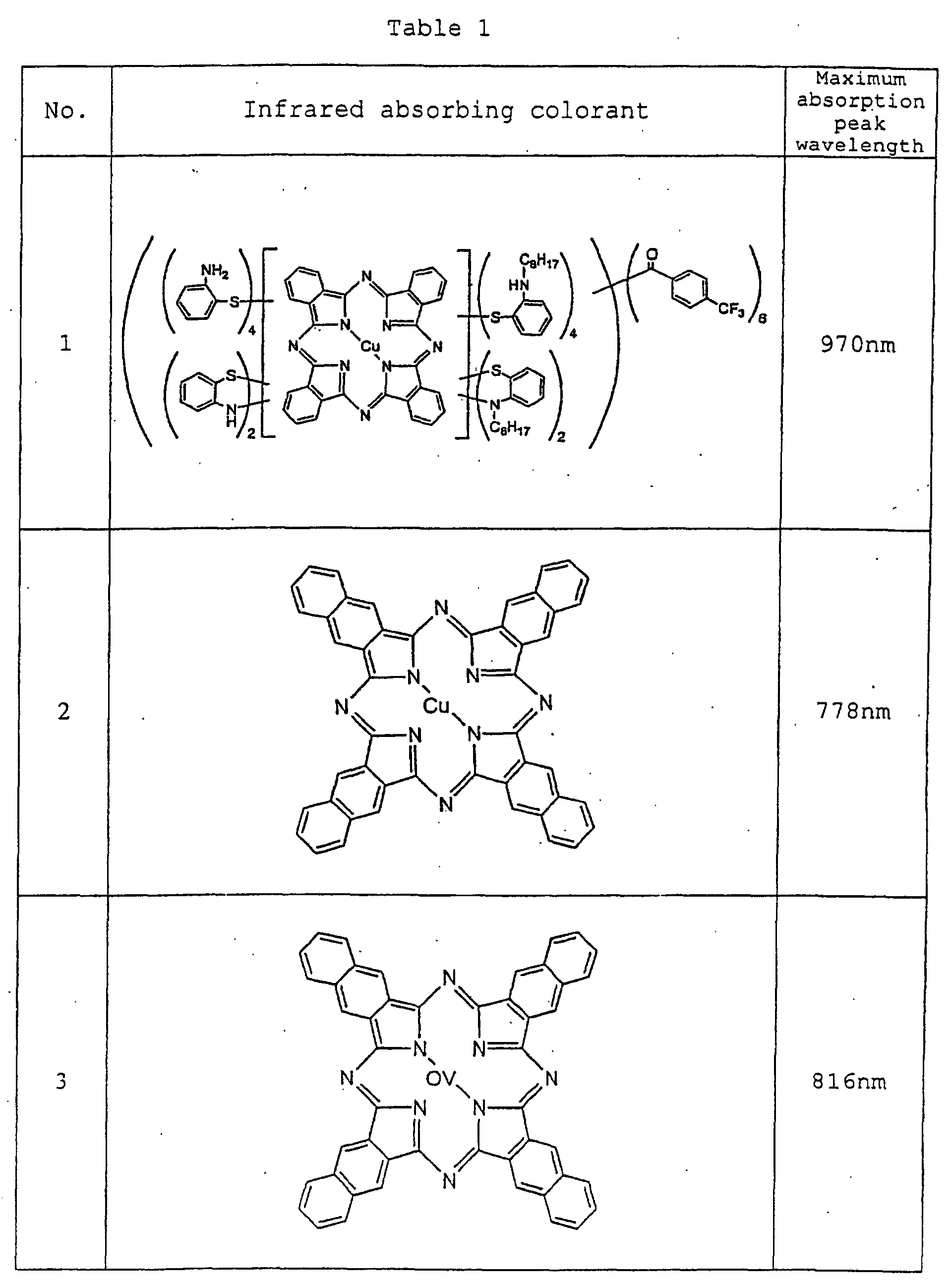

**Table 2**

| | | | | Appearance of bottle | | |
|---|---|---|---|---|---|---|
| | Type and amount of colorant | Preform heating time (sec) | Productivity per hour (preforms /hr) | Stretching failure (number of bottles) | Transparency | Hue |
| Ex. 1 | No.1 10ppm | 60 | 60 | 0 | good | Colorless |
| | | 55 | 65 | 0 | good | Colorless |
| Ex. 2 | No.1 50ppm | 50 | 72 | 0 | good | Colorless |
| | | 45 | 80 | 0 | good | Colorless |
| Ex. 3 | No.2 50ppm | 50 | 72 | 0 | good | very light green |
| Ex. 4 | No.3 50ppm | 50 | 72 | 0 | good | very light yellow |
| | | 45 | 80 | 0 | good | very light yellow |
| Comp. Ex. 1 | Not added | 60 | 60 | 0 | good | Colorless |
| | | 55 | - | 0 | Whitened | - |
| | | 50 | - | 58 | Whitened | - |
| | | 45 | - | 100 | - | - |
| ( Remarks ) Stretching failure : Shaping of the preform to a bottle was infeasible because the preform was broken in the course of stretching or the preform was partially stretched. | | | | | | |
| Transparency: The transparency was evaluated by visual observation. By the term "good" is meant that none of 100 bottles were whitened. | | | | | | |
| Hue : The hue was evaluated by visual observation. | | | | | | |

## Claims

1. A preform for a polyester resin composition blow molded product, comprising a polyester resin composition and having a temperature of not higher than the glass transition temperature, said polyester resin composition comprising a polyester resin and an infrared absorbing colorant which is at least one colorant selected from a phthalocyanine infrared absorbing colorant and a naphthalocyanine infrared absorbing colorant and which has an infrared maximum absorption peak in the region of 700 to 2000 nm.

2. The preform for a polyester resin composition blow molded product as claimed in claim 1, wherein the infrared absorbing colorant is at least one colorant selected from a phthalocyanine compound represented by the following formula (1) and a naphthalocyanine compound represented by the following formula (2): 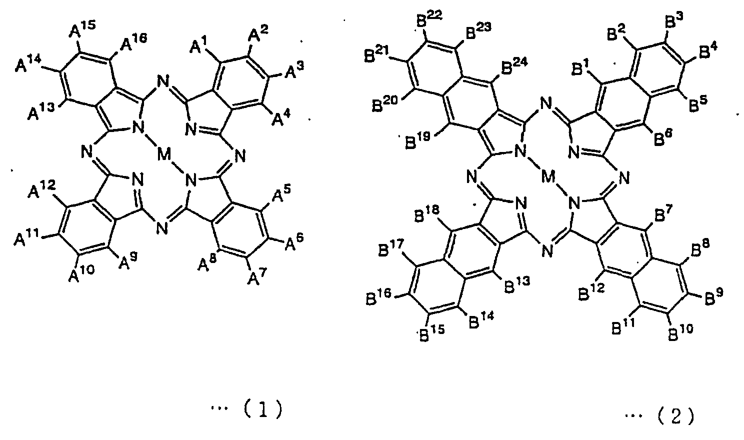 wherein M is a divalent metal atom, a trivalent substituted metal atom, a tetravalent substituted atom or an oxy metal,
A¹ to A¹⁶ and B¹ to B²⁴ may be the same or different and are each a hydrogen atom, a halogen atom, an alkyl group which may have a substituent, an aryl group which may have a substituent, an alkoxy group which may have a substituent, an aryloxy group which may have a substituent, an alkylthio group which may have a substituent, an arylthio group which may have a substituent, an alkylamino group which may have a substituent or an arylamino group which may have a substituent, and
two neighboring groups of the groups indicated by A¹ to A¹⁶ may be linked to form a five-membered ring or a six-membered ring in cooperation with carbon atoms to which said two neighboring groups are bonded, and two neighboring groups of the groups indicated by B¹ to B²⁴ may be linked to form a five-membered ring or a six-membered ring in cooperation with carbon atoms to which said two neighboring groups are bonded.

3. The preform for a polyester resin composition blow molded product as claimed in claim 1 or 2, wherein the polyester resin is polyethylene terephthalate or polyethylene naphthalate.

4. A polyester resin composition blow molded product produced by a cold parison process from a polyester resin composition comprising a polyester resin and an infrared absorbing colorant which is at least one colorant selected from a phthalocyanine infrared absorbing colorant and a naphthalocyanine infrared absorbing colorant and which has an infrared maximum absorption peak in the region of 700 to 2000 nm.

5. The polyester resin composition blow molded product as claimed in claim 4, wherein the infrared absorbing colorant is at least one colorant selected from the phthalocyanine compound represented by the formula (1) and the naphthalocyanine compound represented by the formula (2) according to claim 2.

6. The polyester resin composition blow molded product as claimed in claim 4 or 5, wherein the polyester resin is polyethylene terephthalate or polyethylene naphthalate.

7. A process for producing a polyester resin composition blow molded product, comprising the steps of:
heating a preform formed from a polyester resin composition and having a temperature of not higher than the glass transition temperature by a near infrared heater, said polyester resin composition comprising a polyester resin and an infrared absorbing colorant which is at least one colorant selected from a phthalocyanine infrared absorbing colorant and a naphthalocyanine infrared absorbing colorant and which has an infrared maximum absorption peak in the region of 700 to 2000 nm, and
blow molding the preform.
